Europäisches Patentamt

European Patent Office

Office européen des brevets

(11) Numéro de publication : **0 373 136 B1**

(12) **FASCICULE DE BREVET EUROPEEN**

(19)

(45) Date de publication du fascicule du brevet :
**15.07.92 Bulletin 92/29**

(21) Numéro de dépôt : **89870172.7**

(22) Date de dépôt : **03.11.89**

(51) Int. Cl.$^5$ : **G01B 11/30**

(54) Procédé et dispositif de mise en place et de protection d'un rugosimètre optique dans un laminoir à froid.

(30) Priorité : **07.11.88 BE 8801272**

(43) Date de publication de la demande :
**13.06.90 Bulletin 90/24**

(45) Mention de la délivrance du brevet :
**15.07.92 Bulletin 92/29**

(84) Etats contractants désignés :
**BE DE FR GB IT LU NL**

(56) Documents cités :
**DE-A- 2 117 990**
**PATENT ABSTRACTS OF JAPAN, vol. 12, no. 163 (P-703)(3010), 18 mai 1988; &JP - A - 62 277512.**
**PATENT ABSTRACTS OF JAPAN, vol. 12, no. 401 /P-776)(3248), 25 octobre 1988; & JP - A - 63 140946.**

(73) Titulaire : **CENTRE DE RECHERCHES METALLURGIQUES CENTRUM VOOR RESEARCH IN DE METALLURGIE Association sans but lucratif**
**Vereniging zonder winstoogmerk Rue Montoyer, 47**
**B-1040 Bruxelles (BE)**

(72) Inventeur : **Pirlet, Robert**
**32, Avenue des Lauriers**
**B-4920 Chaudfontaine Embourg (BE)**

(74) Mandataire : **Lacasse, Lucien Emile et al**
**CENTRE DE RECHERCHES METALLURGIQUES Abbaye du Val-Benoît 11, rue Ernest Solvay**
**B-4000 Liège (BE)**

Jouve, 18, rue Saint-Denis, 75001 PARIS

EP 0 373 136 B1

## Description

La présente invention concerne un procédé et un dispositif de mise en place et de protection d'un rugosimètre optique dans un laminoir à froid.

On sait que diverses propriétés d'une bande d'acier laminée à froid, notamment son aptitude à l'emboutissage et à l'accrochage d'un revêtement ainsi que son aspect après peinture, sont fortement influencées par la rugosité de cette bande. Il importe donc de pouvoir mesurer cette rugosité et de surveiller ses variations pendant le processus de fabrication, de préférence immédiatement après la sortie de la dernière cage de laminage à froid. Le présent demandeur a développé à cet effet une méthode de mesure qui donne d'excellents résultats. Cette méthode est exposée dans le brevet BE-A-905862. Elle appartient aux méthodes de mesure dites "optiques", car elle est basée sur l'utilisation de rayonnements, en l'occurrence de faisceaux laser, dont on mesure l'intensité réfléchie par la surface de la bande.

L'utilisation industrielle d'une méthode de mesure optique de la rugosité d'une bande, telle que celle qui vient d'être rappelée, rencontre cependant d'importantes difficultés pratiques. En effet, l'émulsion ou l'huile appliquée par projection sur la bande avant le bobinage se disperse sous la forme de fines gouttelettes dans l'atmosphère environnante. Ces gouttelettes en suspension, notamment dans le champ de visée du rugosimètre perturbent la transmission des rayonnements et contrarient par conséquent la mesure de la rugosité. Par ailleurs, ces gouttelettes se déposent sur tous les objets et notamment sur les fenêtres de visée du rugosimètre. Il en résulte un encrassement de ces fenêtres et une difficulté accrue, voire une impossibilité de procéder à une mesure optique de la rugosité.

La présente invention a pour objet de proposer un procédé et un dispositif permettant de supprimer, ou au moins de retarder fortement l'encrassement du rugosimètre par l'émulsion ou l'huile de bobinage.

Conformément à la présente invention, un procédé de mise en place et de protection d'un rugosimètre optique destiné à mesurer la rugosité d'une bande dans un laminoir à froid, est caractérisé en ce que l'on place le rugosimètre à proximité de la bande avec sa face de visée tournée vers la bande, en ce que l'on délimite un espace entourant le rugosimètre, ledit espace étant ouvert en direction de la surface de la bande et en ce que l'on aspire à travers ledit espace l'atmosphère se trouvant à proximité de la bande.

Suivant une réalisation particulière, on réalise ladite aspiration à travers l'extrémité dudit espace située à l'opposé de ladite extrémité ouverte.

Suivant une autre caractéristique du procédé de l'invention, on éloigne le rugosimètre de la bande, on ferme ledit espace, en direction de la surface de la bande, et on interrompt l'aspiration de l'atmosphère pendant les périodes où l'on n'effectue pas de mesures de rugosité.

L'invention porte également sur un dispositif permettant de mettre en oeuvre le procédé qui vient d'être décrit.

A cet effet, le dispositif de protection d'un rugosimètre dans un laminoir à froid, conformément à l'invention, est caractérisé en ce qu'il comporte une enveloppe entourant à distance le rugosimètre, en ce que cette enveloppe délimite un espace situé autour du rugosimètre et ouvert en direction de la surface de la bande, et en ce que cette enveloppe est pourvue de moyens d'aspiration, à travers ledit espace, de l'atmosphère se trouvant à proximité de la bande.

Suivant une variante particulière de ce dispositif, lesdits moyens d'aspiration comprennent au moins un ventilateur. Celui-ci est de préférence disposé dans la paroi de l'enveloppe située à l'opposé de l'extrémité ouverte de celle-ci.

Egalement suivant l'invention, l'enveloppe est munie de moyens de fermeture de son extrémité ouverte; ces moyens comprennent de préférence un couvercle d'obturation pivotant entre une position ouverte, ou position de mesure, et une position fermée, ou position de repos.

Suivant encore une autre caractéristique de l'invention, le rugosimètre est mobile, avec le dispositif de protection, entre une position de mesure, proche de la surface de la bande, et une position de repos, éloignée de la surface de la bande.

Toujours suivant l'invention, le rugosimètre est mobile par rapport au dispositif de protection, entre une position de protection, dans laquelle ledit dispositif de protection entoure le rugosimètre, et une position d'entretien, dans laquelle le rugosimètre se trouve au moins en partie à l'extérieur de l'enveloppe.

Suivant une caractéristique supplémentaire du dispositif de l'invention, le rugosimètre (6) et le dispositif de protection (7;9) sont mobiles, ensemble ou séparément, transversalement par rapport à la direction de déplacement de la bande (3).

D'autres particularités et avantages de l'invention apparaîtront à la lecture de la description détaillée qui va suivre. Cette description porte sur une réalisation préférée de l'invention, illustrée dans les dessins annexés dans lesquels la

figure 1 illustre une localisation préférée du dispositif de l'invention dans un laminoir à froid; et la

figure 2 montre trois positions possibles du rugosimètre et de l'enveloppe de protection, conformément à l'invention.

Les figures ne constituent bien entendu que des représentations schématiques, dans lesquelles on n'a volontairement reproduit que les éléments directement nécessaires à la compréhension de l'invention. Des éléments identiques ou analogues sont désignés par les mêmes repères numériques dans toutes les figures. En outre, les sens de circulation des différents produits sont indiqués par des flèches appropriées.

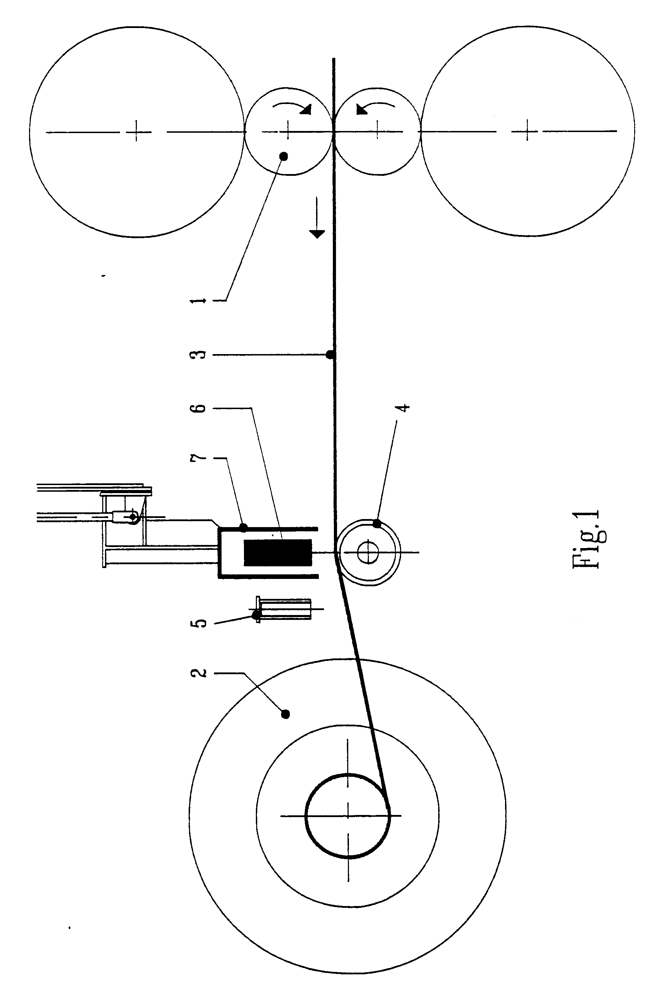

Dans la figure 1, on a représenté l'extrémité de sortie d'un laminoir à froid, comprenant la dernière cage (1) et une bobineuse (2). La bande (3) quittant la dernière cage (1) passe sur un rouleau de support et de guidage (4) avant d'être bobinée dans la bobineuse (2). En (5) est représenté un dispositif de projection d'huile destiné à huiler la bande (3) avant son bobinage; l'huile projetée par ce dispositif se répand sous forme de gouttelettes dans tout l'espace environnant et encrasse dès lors le rugosimètre (6).

Le rugosimètre (6) et son dispositif de protection conforme à l'invention, symbolisé par l'enveloppe (7), peuvent être installés en un point quelconque du trajet de la bande (3) entre la dernière cage de laminoir (1) et la bobineuse (2). Il est cependant particulièrement intéressant de les installer au droit du rouleau de support (4) de la bande (3), comme le montre la figure 1; à cet endroit, les déformations et les mouvements de la bande hors de son plan sont en effet limités, du fait de l'appui de la bande sur le rouleau 4.

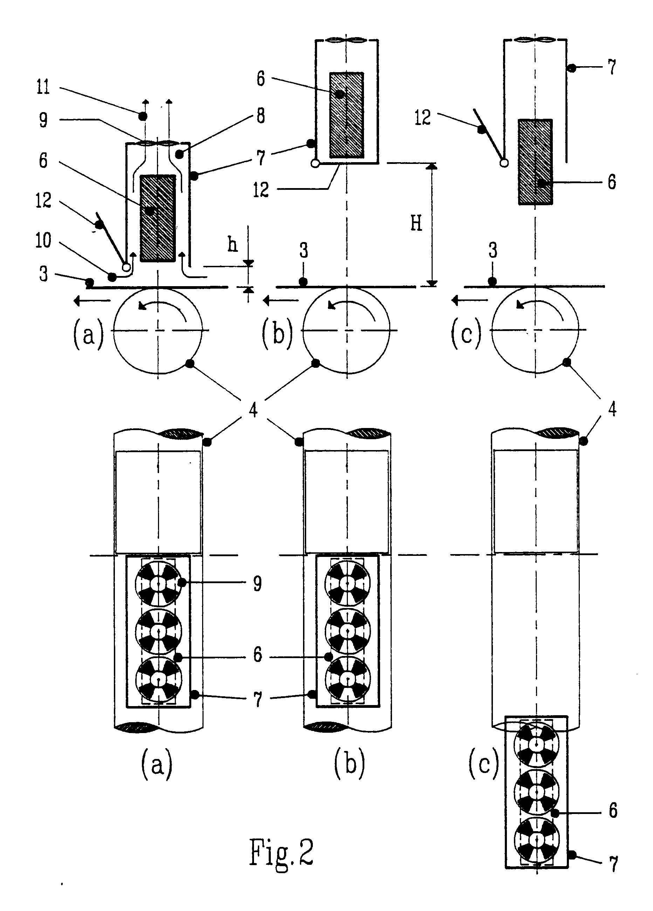

La configuration et le mode de fonctionnement du dispositif de protection sont illustrés de manière plus détaillée dans la figure 2.

La partie supérieure de cette figure 2 montre, en des vues latérales en élévation, trois positions possibles (a), (b), (c) du rugosimètre (6) et du dispositif de protection l'un par rapport à l'autre et par rapport au rouleau de support (4).

La partie inférieure de la figure montre, en des vues en plan, la disposition relative de ces mêmes éléments (4), (6) et (7) dans les trois positions (a), (b), (c) précitées. Dans ces vues, l'enveloppe (7) et le rugosimètre (6) ne s'étendent qu'au-dessus d'une demi-longueur du rouleau (4); cette disposition ne constitue bien entendu qu'un exemple de mise en oeuvre et n'interdit pas l'emploi d'un dispositif centré transversalement sur le rouleau (3).

Les vues (a) illustrent la position du rugosimètre (6) et du dispositif de protection (7) pendant une opération de mesure de la rugosité de la bande (3). La face inférieure du rugosimètre (6), comportant les fenêtres de visée non représentées, se trouve à la distance h requise de la surface de la bande. Cette face inférieure est munie d'un couvercle pivotant (12) qui peut obturer les fenêtres de visée du rugosimètre entre les périodes de mesure. L'enveloppe (7) du dispositif de protection entoure à distance le rugosimètre (6) et délimite autour de celui-ci un espace (8) ouvert à son extrémité inférieure, c'est-à-dire en direction de la bande (3). Le bord inférieur de l'enveloppe est de préférence situé sous le niveau de la face inférieure du rugosimètre (6). A sa partie supérieure, l'enveloppe est munie de ventilateurs aspirants (9).

Dans les vues (a), le rugosimètre (6) et le dispositif de protection (7;9) sont en place, à la distance h de la bande, et on mesure la rugosité de la bande (3).

Le couvercle (12) est en position d'ouverture. Les ventilateurs (9) fonctionnent et aspirent l'atmosphère se trouvant dans l'espace (8). Cette atmosphère circule suivant les flèches (10) et (11), entraînant l'air chargé de particules d'huile qui se trouve à proximité de la bande (3). De cette façon, les particules d'huile provenant du dispositif de projection (5) (voir figure 1) sont déviées avant d'atteindre les fenêtres de visée dans la face inférieure du rugosimètre (6). L'encrassement de ces fenêtres est donc retardé dans une large mesure.

Les vues (b) illustrent la situation de repos, entre deux périodes de mesure de la rugosité; l'ensemble constitué du rugosimètre (6) et du dispositif de protection (7) est relevé à une distance H > h par rapport à la bande (3) et le couvercle d'obturation (12) est rabattu devant la face inférieure du rugosimètre (6).

Les vues (c) montrent d'une part que l'ensemble (6;7) peut être déporté latéralement par rapport à la bande (3) et d'autre part que l'enveloppe (7) peut être relevée par rapport au rugosimètre (6), ou inversément que le rugosimètre (6) peut être abaissé par rapport à l'enveloppe (7), pour permettre d'effectuer sur celui-ci les travaux d'entretien et de réparation.

Le procédé et le dispositif de l'invention permettent de protéger efficacement un rugosimètre optique contre l'encrassement dans l'atmosphère chargée d'huile et de poussières d'un laminoir à froid. En outre, l'enveloppe protège mécaniquement le rugosimètre en cas de mouvements intempestifs de la bande hors de son plan, notamment pendant les périodes de mesure.

L'invention n'est évidemment pas limitée à l'exemple de réalisation qui vient d'être décrit et illustré. Elle s'étend également aux différentes modifications technologiques qu'un homme de métier pourrait y apporter, dans le cadre des revendications qui suivent.

## Revendications

1. Procédé de mise en place et de protection d'un rugosimètre optique destiné à mesurer la rugosité d'une bande (3) dans un laminoir à froid, caractérisé en ce que l'on place le rugosimètre (6) à proximité de la bande (3) avec sa face de visée tournée vers ladite bande (3), en ce que l'on délimite un espace (8) entourant le rugosimètre, ledit espace ayant une extrémité ouverte en direction de la surface de la bande, et en ce que l'on aspire à travers ledit espace l'atmosphère se trouvant à proximité de la bande.

2. Procédé suivant la revendication 1, caractérisé en ce que l'on réalise l'aspiration de ladite atmosphère à travers l'extrémité dudit espace située à l'opposé de ladite extrémité ouverte.

3. Procédé suivant l'une ou l'autre des revendications 1 et 2, caractérisé en ce que l'on éloigne le rugosimètre (6) de la bande (3), en ce que l'on ferme ledit espace et en ce que l'on interrompt l'aspiration de ladite atmosphère pendant les périodes où l'on n'effectue pas de mesures de rugosité.

4. Dispositif de protection (7;9) pour la mise en oeuvre du procédé suivant l'une ou l'autre des revendications précédentes, caractérisé en ce qu'il comporte une enveloppe (7) entourant à distance le rugosimètre (6), en ce que cette enveloppe (7) délimite un espace (8) situé autour du rugosimètre (6), l'enveloppe (7) ayant une extrémité ouverte en direction de la surface de la bande (3), et en ce que cette enveloppe (7) est pourvue de moyens (9) d'aspiration à travers ledit espace (8), de l'atmosphère se trouvant à proximité de la bande (3).

5. Dispositif suivant la revendication 4, caractérisé en ce que lesdits moyens d'aspiration (9) sont disposés dans la paroi de l'enveloppe (7) qui est située à l'opposé de l'extrémité ouverte de celle-ci.

6. Dispositif suivant l'une ou l'autre des revendications 4 et 5, caractérisé en ce que l'enveloppe (7) est munie de moyens (12) de fermeture de son extrémité ouverte.

7. Dispositif suivant l'une ou l'autre des revendications 4 à 6, caractérisé en ce que l'ensemble constitué par le rugosimètre (6) et le dispositif de protection (7;9) est mobile entre une position de mesure (a) proche de la surface de la bande et une position de repos (b) éloignée de la surface de la bande (3).

8. Dispositif suivant l'une ou l'autre des revendications 4 à 7, caractérisé en ce que le rugosimètre (6) est mobile par rapport au dispositif de protection (7;9) entre une position de protection (b) dans laquelle ledit dispositif de protection (7;9) entoure le rugosimètre (6) et une position d'entretien (c) dans laquelle le rugosimètre (6) se trouve au moins en partie à l'extérieur de l'enveloppe (7).

9. Dispositif suivant l'une ou l'autre des revendications 4 à 8, caractérisé en ce que le rugosimètre (6) et le dispositif de protection (7;9) sont mobiles, ensemble ou séparément, transversalement par rapport à la direction de déplacement de la bande (3).

10. Utilisation d'un dispositif suivant l'une ou l'autre des revendications 4 à 9, dans laquelle le rugosimètre (6) et le dispositif de protection (7;9) sont montés au droit d'un rouleau (4) de support de la bande (3) dans une installation de laminage à froid.

## Patentansprüche

1. Verfahren zum Anbringen und zum Schutz eines optischen Rauhigkeitsmessers, der dazu dient, die Rauhigkeit eines Bandes (3) in einem Kaltwalzwerk zu messen, dadurch gekennzeichnet, daß man den Rauhigkeitsmesser (6) in der Nähe des Bandes (3) mit der Beobachtungsseite in Richtung auf das Band (3) anbringt, daß man einem den Rauhigkeitsmesser umgebenden Raum (8) begrenzt, wobei jener Raum ein auf die Oberfläche des Bandes gerichtetes offenes Ende aufweist, und daß man die sich in der Nähe des Bandes befindliche Atmosphäre durch diesen Raum hindurch absaugt.

2. Verfahren nach Anspruch 1, dadurch gekennzeichnet, daß das Absaugen jener Atmosphäre durch das dem offenen Ende jenes Raumes gegenüberliegende Ende hindurch erfolgt.

3. Verfahren nach einem der Ansprüche 1 und 2, dadurch gekennzeichnet, daß man den Rauhigkeitsmesser (6) von dem Band (3) entfernt, daß man jenen Raum verschließt und daß man das Absaugen jener Atmosphäre während des Zeitraums, in dem keine Rauhigkeitsmessungen vorgenommen werden, unterbricht.

4. Schutzeinrichtung (7; 9) zur Durchführung des Verfahrens nach einem der vorhergehenden Ansprüche, dadurch gekennzeichnet, daß sie eine den Rauhigkeitsmesser (6) mit Abstand umgebende Hülle (7) umfaßt, daß diese Hülle (7) einen den Rauhigkeitsmesser (6) umgebenden Raum (8) begrenzt, wobei die Hülle (7) ein auf die Oberfläche des Bandes (3) gerichtetes offenes Ende aufweist, und daß diese Hülle (7) mit Mitteln (9) zum Absaugen der sich in der Nähe des Bandes (3) befindlichen Atmosphäre durch jenen Raum (8) hindurch ausgestattet ist.

5. Einrichtung nach Anspruch 4, dadurch gekennzeichnet, daß jene Absaugmittel (9) an der Wand der Hülle (7) angebracht sind, die deren offenem Ende gegenüberliegt.

6. Einrichtung nach einem der Ansprüche 4 und 5, dadurch gekennzeichnet, daß die Hülle (7) mit Mitteln (12) zum Verschließen ihres offenen Endes versehen ist.

7. Einrichtung nach einem der Ansprüche 4 bis 6, dadurch gekennzeichnet, daß der aus Rauhigkeitsmesser (6) und Schutzeinrichtung (7; 9) bestehende Aufbau zwischen einer nahe der Oberfläche des Bandes gelegenen Meßstellung (a) und einer von der Oberfläche des Bandes (3) entfernten Ruhestellung (b) beweglich ist.

8. Einrichtung nach einem der Ansprüche 4 bis 7, dadurch gekennzeichnet, daß der Rauhigkeitsmesser (6) bezüglich der Schutzeinrichtung (7; 9) zwischen einer Schutzstellung (b), in der jene Schutzeinrichtung (7; 9) den Rauhigkeitsmesser (6) umgibt, und einer Wartestellung (c), in der sich der Rauhigkeitsmesser (6) mindestens teilweise außerhalb der Hülle (7) befindet, beweglich ist.

9. Einrichtung nach einem der Ansprüche 4 bis 8, dadurch gekennzeichnet, daß der Rauhigkeitsmesser (6) und die Schutzeinrichtung (7; 9) zusammen oder getrennt quer zur Fortbewegungsrichtung des Bandes (3) beweglich sind.

10. Verwendung einer Einrichtung nach einem der Ansprüche 4 bis 9, in der der Rauhigkeitsmesser (6) und die Schutzeinrichtung (7; 9) in einer Kaltwalzanlage direkt oberhalb einer Walze (4) zum Abstützen des Bandes (3) angebracht sind.

**Claims**

1. Method for the installation and protection of an optical roughnessmeter intended to measure the roughness of a strip (3) in a cold-rolling mill, characterised in that the roughnessmeter (6) is placed in the vicinity of the strip (3) with its observation face turned towards the said strip (3), in that a space (8) surrounding the roughnessmeter is delimited, the said space having an end which is open in the direction of the surface of the strip, and in that the atmosphere located in the vicinity of the strip is sucked through the said space.

2. Method according to Claim 1, characterised in that the said atmosphere is sucked through that end of the said space which is located opposite the said open end.

3. Method according to either of Claims 1 or 2, characterised in that the roughnessmeter (6) is moved away from the strip (3), in that the said space is closed and in that sucking of the said atmosphere is discontinued during those periods when no roughness measurements are taken.

4. Protection device (7; 9) for implementing the method according to any of the preceding claims characterised in that it comprises a housing (7) surrounding the roughnessmeter (6) at a distance, in that this housing (7) delimits a space (8) located around the roughnessmeter (6), the housing (7) having an end which is open in the direction of the surface of the strip (3), and in that this housing (7) is provided with means (9) for sucking the atmosphere located in the vicinity of the strip (3) through the said space (8).

5. Device according to Claim 4, characterised in that the said sucking means (9) are arranged in the wall of the housing (7), which is located opposite the open end of the latter.

6. Device according to either of Claims 4 or 5, characterised in that the housing (7) is equipped with means (12) for closing its open end.

7. Device according to any of Claims 4 to 6, characterised in that the assembly constituted by the roughnessmeter (6) and the protection device (7; 9) is movable between a measurement position (a) close to the surface of the strip and a rest position (b) at a distance from the surface of the strip (3).

8. Device according to any of Claims 4 to 7, characterised in that the roughnessmeter (6) is movable relative to the protection device (7; 9) between a protection position (b) in which the said protection device (7; 9) surrounds the roughnessmeter (6) and a maintenance position (c) in which the roughnessmeter (6) is located at least partially outside the housing (7).

9. Device according to any of Claims 4 to 8, characterised in that the roughnessmeter (6) and the protection device (7; 9) are movable, together or separately, transversely relative to the direction of movement of the strip (3).

10. Use of a device according to any of Claims 4 to 9, in which the roughnessmeter (6) and the protection device (7; 9) are mounted perpendicularly above a carrying roll (4) of the strip (3) in a cold-rolling installation.

Fig.1

Fig.2